Europäisches Patentamt

European Patent Office

Office européen des brevets

(19)

(11) **EP 1 429 594 B1**

(12) **EUROPÄISCHE PATENTSCHRIFT**

(45) Veröffentlichungstag und Bekanntmachung des Hinweises auf die Patenterteilung:
**26.01.2005 Patentblatt 2005/04**

(51) Int Cl.⁷: **A01B 79/00**, A01G 7/00

(21) Anmeldenummer: 02767130.4

(86) Internationale Anmeldenummer:
**PCT/DE2002/003192**

(22) Anmeldetag: **27.08.2002**

(87) Internationale Veröffentlichungsnummer:
**WO 2003/026383 (03.04.2003 Gazette 2003/14)**

(54) **VERFAHREN UND VORRICHTUNG ZUM BERÜHRUNGSLOSEN BESTIMMEN UND BEEINFLUSSEN DES PFLANZENZUSTANDES**

METHOD AND DEVICE FOR DETERMINING AND INFLUENCING THE STATE OF PLANTS IN A CONTACTLESS MANNER

PROCEDE ET DISPOSITIF PERMETTANT DE DETERMINER SANS CONTACT ET D'INFLUENCER L'ETAT DE PLANTES

(84) Benannte Vertragsstaaten:
**AT BE BG CH CY CZ DE DK EE ES FI FR GB GR IE IT LI LU MC NL PT SE SK TR**

(30) Priorität: **26.09.2001 DE 10148746**

(43) Veröffentlichungstag der Anmeldung:
**23.06.2004 Patentblatt 2004/26**

(73) Patentinhaber: **NORSK HYDRO ASA**
**0257 Oslo 2 (NO)**

(72) Erfinder: **REUSCH, Stefan**
**48249 Dülmen (DE)**

(74) Vertreter: **Hannig, Wolf-Dieter, Dipl.-Ing.**
**Cohausz Dawidowicz Hannig & Partner**
**Friedlander Strasse 37**
**12489 Berlin (DE)**

(56) Entgegenhaltungen:
DE-A- 4 446 481          DE-A- 19 723 770
DE-A- 19 858 168          DE-A- 19 950 396
DE-C- 10 002 880

## Beschreibung

Die Erfindung betrifft ein Verfahren zum berührungslosen Bestimmen und Beeinflussen des Pflanzenzustandes, insbesondere teilflächenspezifischen Düngen von Pflanzen, bei dem die Pflanzen mit einer modulierten künstlichen Lichtquelle aus Halogen- oder Xenonlicht durch einen Lichtfleck oder -streifen während des Überfahrens mit einem Träger beleuchtet, Reflexionssignale des Blattwerkes der Pflanzen im sichtbaren und/oder nahinfraroten Spektralbereich durch Detektoren erfasst und an eine Auswerte- und Signalverarbeitungseinrichtung zum Bestimmen der biophysikalischen Parameter wie Biomasse, Chlorophyllund/oder Wassergehalt weitergegeben werden und daraus ein Maß für den Ernährungszustand der Pflanzen ermittelt wird, mit dem ein Rechner die entsprechend auszubringende Düngermenge als Zielgröße steuert.

Die Erfindung betrifft ferner eine Vorrichtung zum Bestimmen und Beeinflussen des Pflanzenzustandes, insbesondere teilflächenspezifischen Düngen von Pflanzen zur Durchführung des Verfahrens, mit einem verfahrbaren Träger, beispielsweise Fahrzeug und/oder angekuppelte Arbeitsmaschinen, mindestens eine am Träger befestigte Lichtquelle zum aktiven Beleuchten des Pflanzenbestandes als Sender, Detektoren als Empfänger der Reflexions- und/oder Fluoreszenzstrahlung, einer Auswerte- und Signalverarbeitungseinrichtung zum Bestimmen des Ernährungszustands der Pflanzen durch Verarbeiten der Reflexions- und/oder Fluoreszenzsignale, einem im Träger angeordneten Bedienterminal und einem Ausbringer zur variablen Verteilung der Düngemittel.

Aus der DE 199 50 396 A1 ist ein Verfahren zum Bestimmen des Pflanzenzustandes bekannt, bei dem durch künstliche Lichtquellen, insbesondere Lumineszenz- oder Laserdioden, beim Überfahren des Pflanzenbestandes Reflexionssignale des Blattwerkes der Pflanzen im sichtbaren und/oder nahinfraroten Bereich erzeugt, diese Signale mittels Detektoren erfasst und an eine Signal-Verarbeitungseinheit weitergegeben werden sowie in dieser nach einem speziellen Auswertealgorithmus der Pflanzenzustand ermittelt wird. Der zu messende Pflanzenbestand wird mit einem Lichtfleck oder -streifen aus mindestens vier lichtstarken Leuchtdioden unterschiedlicher Wellenlänge oder Gruppen eines Diodentyps beleuchtet, deren Wellenlänge in der Gruppe gleich, von Gruppe zu Gruppe jedoch verschieden sind. Die Lichtquellen werden durch synchrones Modulieren mit einer Frequenz von mindestens 10 Hz bis einigen MHz in schneller Folge an- und abgeschaltet, um das Hintergrundsignal und das Summensignal aus Reflexionssignal und natürlicher Bestrahlung nacheinander mit dem Detektor zu erfassen, wobei die Frequenz so gewählt wird, dass sich die Sichtfelder des Lichtfleckes bzw. -streifen beim Überfahren zumindest halb überschneiden. Synchron zur Modulation werden die Reflexionssignale vom Blattwerk durch Referenzieren der Hintergrundsignale und der Summensignals des Reflexionssignals ermittelt.

Die DE 197 23 770 A1 bzw. WO 98/54960 A beschreiben eine Pflanzenzustandsmessvorrichtung für die Erfassung des Pflanzenzustandes mit einem optischen Sensor, der auf die zu messenden Pflanzen gerichtet ist und der die von der Pflanze abgegebenen optischen Signale empfängt und an eine SignalVerarbeitungseinrichtung weiterleitet. Es wird bei dieser bekannten Lösung eine künstliche Strahlungsquelle, beispielsweise ein scheinwerferähnliches Halogenlicht bzw. Xenonlicht oder ein Laserlicht eingesetzt, das den Pflanzenbestand frontal oder geringfügig von oben jeweils punktförmig beleuchtet.

Die in dieser bekannten Lehre eingesetzten Konstantlichtquellen erzeugen zwar ein Licht, das gegenüber Lumineszenzdioden eine weitaus größere Bestrahlungsstärke erreicht, trotzdem überwiegt je nach Stärke der eingesetzten Strahlungsquelle immer noch der Anteil des natürlichen Lichtes. Eine Abdeckhaube soll deshalb die Einstrahlung des natürlichen Lichts auf den Lichtfleck verringern. Eine solche Abdeckung ist beim Überfahren des Pflanzenbestandes eher hinderlich und unpraktikabel in der Handhabung.

Da der Lichtfleck des Schweinwerfers keine hinreichend große Fläche beleuchtet, sind außerdem die gewonnenen Messergebnisse aus der Reflexionsstrahlung der Pflanzen keineswegs repräsentativ für den Pflanzenbestand.

Das erzeugte Licht ist zwar spektral breitbandig, so dass die von den Pflanzen reflektierte Strahlung und die Hintergrundstrahlung ein Summensignal darstellt, das ohne Filterung und Referenzierung keine auswertbaren Ergebnisse liefert.

Mit dieser bekannten Lösung kann zwar die Ausbringermenge variiert werden, jedoch ist diese Lösung nicht geeignet, eine teilflächenspezifische Ausbringung von Dünger mit ausreichender Genauigkeit unter allen vorkommenden Lichtbedingungen zu realisieren.

Die aktive Beleuchtung des Pflanzenbestandes mit monochromatischen Lichtstrahlen von Leucht- oder Laserdioden im Wellenlängenbereich ist auch aus der US 5 389 781 bekannt. Mindestens zwei Emitter strahlen monochromatisches Licht mit einer unterschiedlichen Wellenlänge auf den Pflanzenbestand ab, um Unkraut aus dem Pflanzenbestand selektiv festzustellen und anschließend zu eleminieren. Die Emitter (LED's) werden in schneller Folge anund ausgeschaltet. Dies geschieht dadurch, dass der Strom für jeden der beiden Emitter mit einer hohen Frequenz, beispielsweise 455 kHz, moduliert wird. Die von den Emittern abstrahlenden Lichtstrahlen werden durch Emitterlinsen punktförmig fokussiert, bevor sie auf die vorbestimmte Fläche treffen. Der Pflanzenbestand einschließlich Unkraut reflektiert die Strahlung, die von einem Fotodetektor erfasst wird. Die reflektierte Strahlung enthält unterschiedliche Wellenlängenanteile an monochromatischen Licht je nach dem, ob das Licht an pflanzen oder vom Boden reflektiert wurde. Durch eine speziell zwischen Fotodetektor und dem Reflexionsort angeordnete Detektorlinse und eine Aperturblende wird der Anteil der Bodenstrahlung eliminiert. Die vom Fotodetektor erfassten Anteile der Strahlung der beiden Emitter werden in eine Phase umgewandelt, mit einer Vergleichsphase verglichen und in einem Rechner verarbeitet, um einen Ausbringer für Unkrautbekämpfungsmittel zu steuern.

Aus der WO 95/15488 A1 ist außerdem eine Einrichtung zum Messen von in Flüssigkeiten enthaltenen Festkörpern mit Licht bekannt, das Infrarot- und Ultraviolettlicht einschließt. Diese bekannte Einrichtung ist zumindest mit zwei Paar kreuzweise angeordneten Lichttransmittern und einem Detektor ausgerüstet. Die einzelnen zu einem Lichttransmitterpaar angeordneten Transmitter senden kohärentes Licht, d.h. Licht aus, dass die gleiche Wellenlänge hat, während die Wellenlängen der Transmitterpaare voneinander unterschiedlich sind. Das in der WO 95/15488 A1 realisierte Messverfahren beruht darauf, dass durch eine Suspension hindurchtretende Licht zu messen und die Differenz zwischen dem emittierten und dem detektierten Licht als eine Messgröße für die Konzentration der Festkörper in der Flüssigkeit zu bestimmen. Die einzelnen Lichtquellenpaare müssen bei dieser bekannten Lösung immer eine exakt definierte Lage einnehmen und der Detektor für den Empfang des reflektierten Lichts muss im Zentrum der gegeneinander emittierenden Lichtquellen liegen.

Wenn der Ernährungszustand der Pflanzen mittels aktiver Beleuchtung bestimmt werden soll, muss die künstliche Lichtquelle Lichtintensitäten besitzen, die der natürlichen Beleuchtung zumindest sehr nahe kommt. Um eine derartig hohe Lichtintensität für eine hinreichend große Fläche, beispielsweise einige Quadratmeter, zu erreichen, verwendet der Stand der Technik scheinwerferähnliche Lampenanordnungen von Dioden oder Lasern.

Die trotzdem insgesamt nicht ausreichende Beleuchtungsstärke dieser künstlichen Lichtquellen ist außerdem mit dem Nachteil verbunden, dass Fluoreszenzmessungen nicht mit ausreichender Genauigkeit durchgeführt werden können, weil die Intensität der Fluoreszenzstrahlung der bestrahlten Pflanzen sehr gering ist.

Bei diesem Stand der Technik liegt der Erfindung die Aufgabe zugrunde, die Genauigkeit der aktiven Messmethode durch eine gezielte Anpassung an verschiedene Wellenlängen bei gleichzeitiger Reduzierung der Stromaufnahme für die Strahlungsquelle zu erhöhen, störende Einflüsse auf die Messung zu verringern, das Meßsystem zu vereinfachen sowie seine Kompaktheit und Robustheit im rauen landwirtschaftlichen Einsatz zu verbessern.

Diese Aufgabe wird durch ein Verfahren der eingangs genannten Gattung mit den kennzeichnenden Merkmalen des Anspruches 1 und durch eine Vorrichtung mit den kennzeichnenden Merkmalen des Anspruches 14 gelöst. Vorteilhafte Ausgestaltungen des Verfahrens und der Vorrichtung sind den Unteransprüchen entnehmbar.

Das erfindungsgemäße Verfahren zeichnet sich dadurch aus, dass mit einer ausreichend starken Lichtquelle digital . verarbeitbare Reflexions- und/oder Fluoreszenzsignale des Pflanzenbestandes von einer hinreichenden Pflanzenfläche, beispielsweise von mehreren Quadratmetern, aus hinreichender Entfernung von etwa 3 m erzeugt werden, von denen mittels eines selektiv eingestellten Detektors verschiedene, den Ernährungszustand charakterisierende Wellenlängen ausgewählt und bestimmt werden können. Dadurch ist es möglich, die Zielgrößen, wie die Stickstoffgabe auf den Schlag, entsprechend des spezifischen Bedarfs der Pflanzen in der Teilfläche genau zu bestimmen und auszubringen.

Das erfindungsgemäße Verfahren gestattet es ferner, Alterungsvorgänge und/oder variierende Temperaturen in der Lichtquelle und im Detektor durch eine ständige Kontrolle der emittierten Blitzenergie des emittierten Lichts festzustellen und zu korrigieren.

Die Lichtquelle wird mit einem Breitbandfilter versehen, der für die Messung nicht benötigten spektralen Anteile ausblendet. Die Selektivität des Detektors wird durch eine Vielzahl von Interferenzfiltern erreicht, die das Licht wellenlängenabhängig so abschwächen, dass nur Licht mit der jeweilig gewünschten Wellenlänge in den Detektor gelangt. Das Messsystem kann durchaus mit mehr als zwei spektralen Kanälen ausgestattet werden, beispielsweise Kanäle, die jeweils nur Licht einer Mittenwellenlänge von 940 nm bzw. einer Mittenwellenwellenlänge von 970 nm passieren lässt. Bei einer Mittenwellenlänge von 970 nm tritt eine schwache Wassersbsorptionsbande auf, so dass der Quotient aus R(970nm)/R(940nm) repräsentativ für eine Aussage über den relativen Wassergehalt im Bestand ist. Mit Vorteil lässt sich das erfindungsgemäße Verfahren auch zur Messung von Fluoreszenzemissionssignaturen nutzen. Senderseitig wird dann ein Bandpassfilter und empfängerseitig ein Filter eingesetzt, der nur die gewünschten Fluoreszenz-Emissionswellenlängen passieren lässt. Bei Anregungswellenlängen von <650 nm liegen beispielsweise zwei ausgeprägte Fluoreszenzsignale bei 685 nm und 730 nm vor. Das Verhältnis aus diesen beiden Signalen steht in Beziehung zum Chlorophyllgehalt des Pflanzenbestandes, so dass es auf diese Weise möglich ist, indirekte Aussagen über den Ernährungszustand der Pflanzen zu gewinnen.

Für den Landwirt wird der Ausbringeprozeß einfacher, überschaubarer und weniger zeitaufwendig.

Die erfindungsgemäße Vorrichtung zur Durchführung des Verfahrens ist kompakt, robust und zugleich einfach im Aufbau.

Weitere Vorteile und Einzelheiten ergeben sich aus der nachfolgenden Beschreibung unter Bezugnahme auf die beigefügten Zeichnungen.

Die Erfindung soll nachstehend an einem Ausführungsbeispiel näher erläutert werden.

Es zeigen:

Fig. 1    eine Aufsicht des Schleppfahrzeuges mit Sichtfeldgeometrie von Sender und Empfänger,

Fig. 2    eine Rückansicht des Schleppfahrzeuges,

Fig. 3    eine Variante des prinzipiellen Aufbaus von Sender und Empfänger,

Fig. 4    eine Darstellung des Timingdiagrammes des Verstärkers,

Fig. 5    ein beispielhaftes Diagramm für die Auswahl der Wellenlänge,

Fig. 6    ein Beispiel für die Beziehung zwischen Messwert und optimaler Stickstoffgabe und

Fig. 7    ein Blockschaltbild der erfindungsgemäßen Vorrichtung.

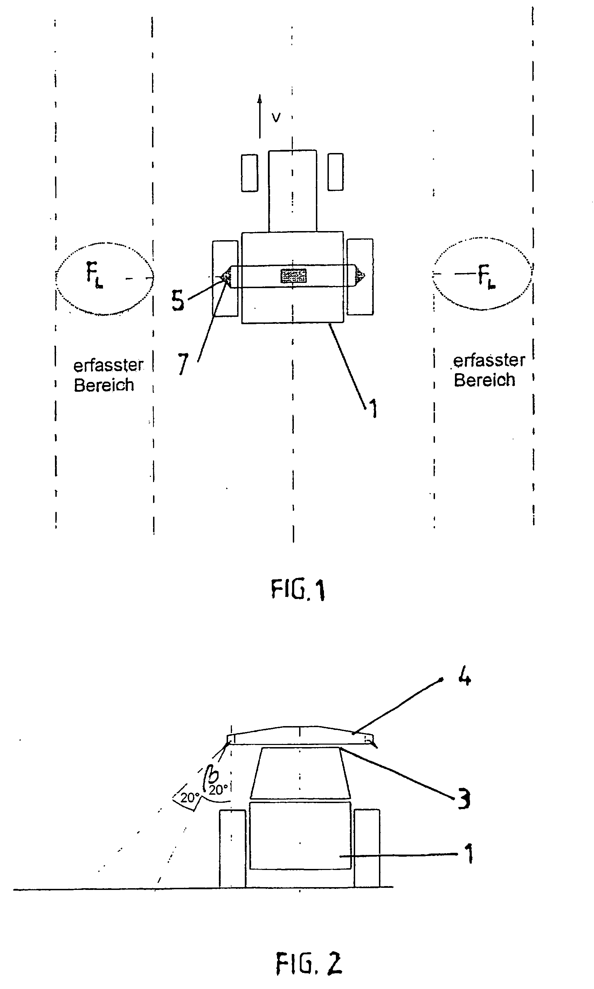

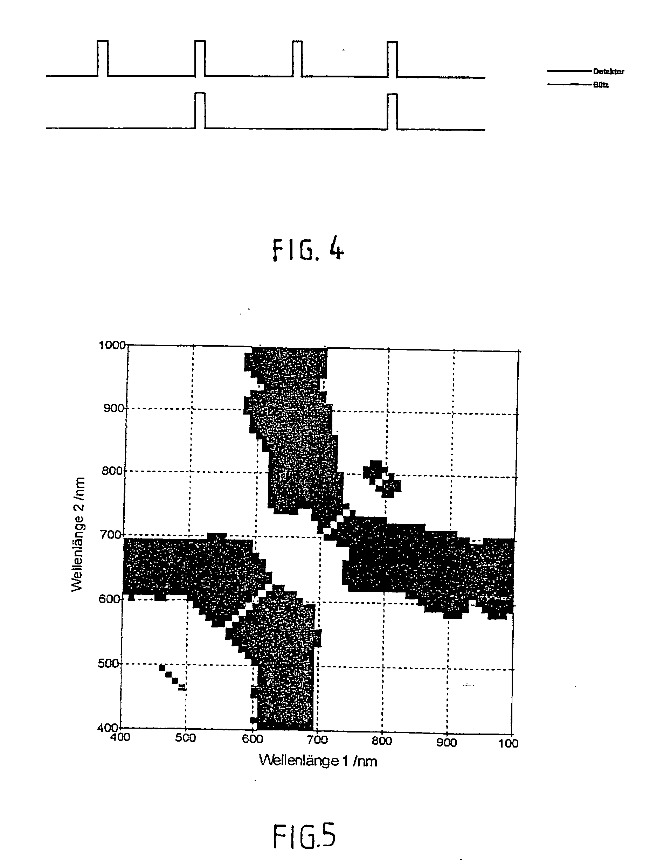

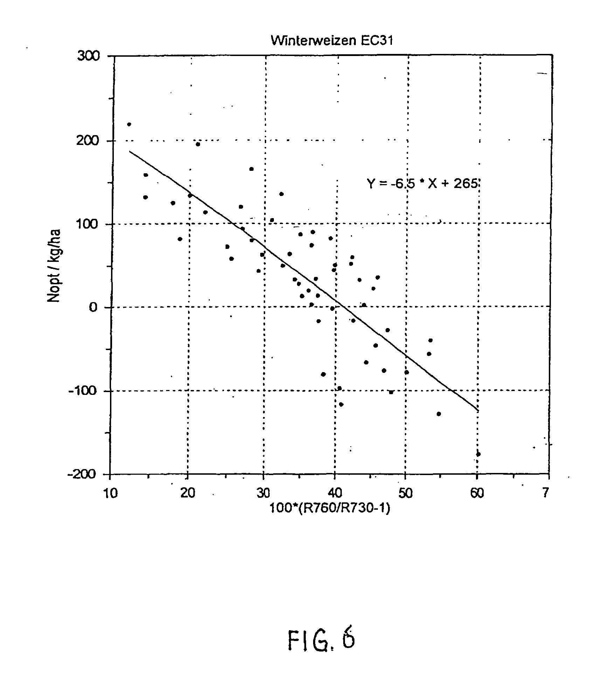

Auf einem beispielsweise mit Winterweizen angebauten Schlag soll das erfindungsgemäße Verfahren zum Ausbringen von Dünger, insbesondere Stickstoff, zur Anwendung kommen. Der Dünger wird mit einem Schleppfahrzeug 1 und Ausbringer 2 auf dem Schlag teilflächenspezifisch ausgebracht.
Am Dach 3 eines Schleppfahrzeuges 1 ist quer zur Fahrtrichtung ein langgestrecktes Gehäuse 4 befestigt. Das Gehäuse 4 (siehe Fig. 1 und 2) trägt jeweils an seinem seitlichen Stirnflächen einen schwenkbar einstellbaren Sender **5** mit Xenon-Blitzlampen **6** und einen Empfänger **7** mit optischen Detektoren **8**. Sender **5** und Empfänger **7** sind vorzugsweise in einem Winkel β von 30° (Schräglage) zum Pflanzenbestand ausgerichtet.
Das Schleppfahrzeug **1** mit seinem Ausbringer **2** bewegt sich mit der Geschwindigkeit **v** im Pflanzenbestand und die Xenon-Blitzlampen **6** beleuchten den Pflanzenbestand jeweils mit einem spektral breitbandigen Lichtfleck $F_L$ von etwa 1 m Durchmesser und einer Energie von etwa 4 J pro Blitz beiderseits zur Fahrtrichtung. Die Xenon-Blitzlampen **6** werden mit einer Frequenz von etwa 10 Hz betrieben. Um eine lückenlose Abtastung des Pflanzenbestandes zu erreichen, muss diese Frequenz **f** so gewählt werden, dass sich bei gegebener Geschwindigkeit **v** über den Bestand, die detektierten Flächen $\pi r^2$ noch überlappen und damit der Bedingung f > v/r genügen.

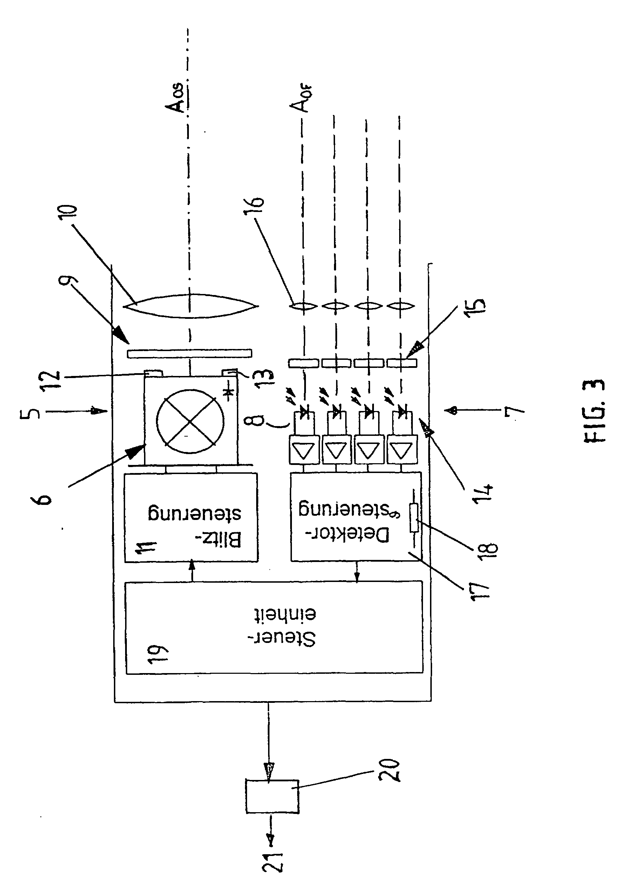

Fig. 3 zeigt den prinzipiellen Aufbau des Senders **5** und Empfängers **7**. Der Sender **5** besteht im wesentlichen aus einer einzigen Xenon-Blitzlampe **6**, einem im Strahlgang der Blitzlampe **6** vorgeordneten Kantenfilter **9** zum Ausblenden nicht benötigter Spektralanteile, einer Optik **10** zum Fokussieren des Lichtes auf den Bestand, einer Blitzsteuerung **11**, einem unmittelbar an der Xenon-Blitzlampe **6** angeordneten Referenzdetektor **12** zum Ermitteln der von jedem Blitz abgegebenen Energie.
Der Empfänger **7** setzt sich aus mehreren, beispielsweise n=4, Fotodioden **14**, im Strahlengang der Dioden **14** vorgeordneten Interferenzfiltern **15,** beispielsweise vier Interferenzfilter, aus einer entsprechenden Anzahl von Optiken **16**, beispielsweise vier Optiken, zum Anpassen des Sichtfeldes der Dioden **14** an den von den Xenon-Blitzlampen **6** beleuchteten Lichtfleck $F_L$, einer Detektorsteuerung **17** und einem zentralen Temperaturfühler **18** zum Kontrollieren von Temperatureffekten zusammen, die auf der Änderung der spektralen Zusammensetzung des Blitzlichtes, der Mittenwellenlänge der Interferenzfilter **15** und der Empfindlichkeiten der Fotodioden **14** beruhen.
Jeweils zwei baugleiche Sender **5** und Empfänger **7** sind auf dem Dach 3 in dem Gehäuse 4 so untergebracht, dass der Pflanzenbestand schräg von oben erfasst werden kann.
Die optischen Achsen $A_{OF}$ der einzelnen Fotodioden **14** liegen parallel zueinander und so nah beieinander, dass ihr Abstand im Verhältnis zur Größe des Messfeldes (Lichtfleck) vernachlässigbar ist. Das gleiche gilt für den Abstand der optischen Achsen $A_{OS}$ des Senders **5** zu denen der Fotodioden **14.**
Die Signale der Fotodioden **14** und des Referenzdetektors **12** werden jeweils an einen integrierenden Verstärker weitergegeben. Die Torzeit des Verstärkers wird dabei so eingestellt, dass sie der Dauer des Blitzes entspricht (siehe Fig. 4). Auf diese Weise wird die natürliche Einstrahlung soweit wie möglich unterdrückt.
Neben dieser Messung des Signals $R_S$ während des Blitzes wird zwischen den Blitzen eine weitere Messung durchgeführt, um das reine Hintergrundsignal $R_D$ zu erfassen.
Je nach Zielgröße, im vorliegenden Beispiel die Stickstoffgabe, können die auszuwählenden Wellenlängen $\lambda_1 ... \lambda_n$ unterschiedlich sein.
Zur Durchführung des Verfahrens wird für die Bestimmung einer optimalen teilflächenspezifischen Stickstoffgabe in Getreide, beispielsweise zum Schossen und Ährenschieben so vorgegangen, dass für zwei Empfangskanäle eine Wellenlängenkombination von $\lambda_1$ und $\lambda_2$ entsprechend vorliegenden Ergebnissen aus Feldversuchen gewählt werden, die den dunklen Flächen in Fig. 5 entsprechen.
Im vorliegenden Beispiel wurde eine Wellenlängenkombination $\lambda_1$ = 730 nm und $\lambda_2$= 760 nm ausgewählt.
Vom Empfänger **7,** insbesondere den Fotodioden **14** werden erfasst:

$R_{S1}$ Reflexionssignal bei $\lambda_1$ und eingeschaltetem Blitz,

$R_{S2}$ Reflexionssignal bei $\lambda_2$ und eingeschaltetem Blitz,
$R_{D1}$ Reflexionssignal bei $\lambda_1$ und ausgeschaltetem Blitz,
$R_{D2}$ Reflexionssignal bei $\lambda_2$ und ausgeschaltetem Blitz.

Der Messwert **S** wird nach Abzug des Hintergrundsignals als Quotient des Reflexionssignals bei $\lambda_1$ und $\lambda_2$ wie folgt gebildet:

$$S = (R_{S2} - R_{D2}) / (R_{S1} - R_{D1}) * C.$$

Die gerätespezifische Kalibrierungskonstante **C** wird durch eine Messung an einem Referenzobjekt mit bekanntem spektralen Reflexionsgrad ($r_1$ bei $\lambda_1$ und $r_2$ bei $\lambda_2$) ermittelt. Dazu wird ein solches Objekt anstelle des Pflanzenbestandes in das Sichtfeld der Fotodioden **14** gebracht und die Kalibrierungskonstante

$$C = (R_{S1} - R_{D1}) / (R_{S2} - R_{D2}) * R_2/R_1$$

bestimmt.

Sollte bei einer Messung mindestens eines der Signale **$R_{XX}$** übersteuert sein, so wird dies erkannt und der Benutzer gewarnt. Unterschreitet einer der hintergrundkorrigierten Messwerte $R_{SX} - R_{DX}$ eine bestimmte Empfindlichkeitsschwelle, so wird ebenfalls eine Warnung ausgegeben.

Darüber hinaus wird mit Hilfe des Referenzdetektors **12** ständig die Energie der Xenon-Blitzlampe **6** kontrolliert und bei einer Abweichung der Benutzer gewarnt. Der Referenzdetektor **12** befindet sich in unmittelbarer Nähe der Blitzlampe **6**, so dass ein Teil des ausgesandten Lichtes auf den Referenzdetektor **12** fällt und zur Bestimmung der emittierten Energie herangezogen werden kann.
In einem weiteren Schritt werden die einmal pro Blitz errechneten Messwerte S über eine bestimmte Zeitspanne, vorzugsweise 1 Sekunde, gemittelt, um das Signal/Rauschverhältnis zu verbessern.

Im letzten Schritt wird dann mit Hilfe des zuvor aus Feldversuchen empirisch ermittelten Zusammenhangs die Stickstoffgabe aus dem gemittelten Messwert **S** bestimmt. Dabei können neben dem Messwert auch noch weitere, vom Benutzer zu spezifizierende Randparameter wie beispielsweise die Fruchtart und -sorte, das Entwicklungsstadium, die mittlere Ertragserwartung u.a. einfließen.
Zwei baugleiche Sender **5** und Empfänger **7** werden auf dem Dach **3** des Schleppfahrzeuges **1** in dem querliegenden Gehäuse **4** eingesetzt, und zwar jeweils ein Sender **5** und ein Empfänger **7** für die linke und für die rechte Teilseite vom Schleppfahrzeug **1**. Dadurch ist es möglich, die gesamte Steuereinheit **19** für die Blitzsteuerung **11** und die Detektorsteuerung **17** innerhalb des langgezogenen Gehäuses **4** platzsparend unterzubringen.
Beide Sender und Empfänger werden über einen Multiplexer **20** von der derselben nachgeordneten Auswerte- und Signalverarbeitungseinrichtung **21** angesteuert. In dieser Auswerte- und Signalverarbeitungseinrichtung **21** sind alle aus Feldversuchen empirisch ermittelten Kennwerte entsprechend abgelegt.

Es kann dabei vorteilhaft sein, die Signale beider Seiten unabhängig voneinander zu verarbeiten, dementsprechend die Stickstoffgabe für beide Teilseiten separat zu berechnen und separat an den Streuercontroller **22** zur Ansteuerung des Ausbringers **2** weiterzugeben.

Mittig auf dem Dach **3** des Schleppfahrzeuges **1** ist ein DGPS-Empfänger **23** befestigt, dessen Antenne **24** freie Sicht zu nicht dargestellten Satelliten besitzt. Natürlich ist es auch möglich, den Empfänger **23** mit Antenne **24** an der Arbeitsmaschine anzuordnen. Dabei muss nur gewährleistet sein, dass die Sicht zu den Satelliten frei bleibt.

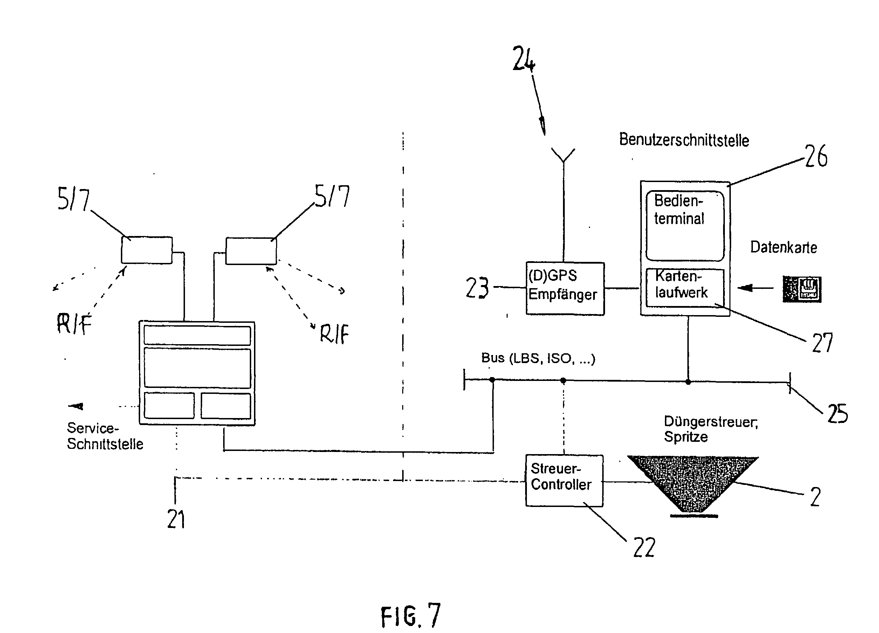

Im Schleppfahrzeug 1 ist -wie in Fig. 7 schematisch in einem Blockschaltbild dargestellt- ein Bus **25** verlegt, an dem ein Bedienterminal **26** und Kartenlaufwerk **27** angeschlossen ist. Der DGPS-Empfänger **23** ist zur Kommunikation mit dem Bedienterminal **26** verbunden oder direkt an den Bus **25** angeschlossen. Die Auswerte- und Signalverarbeitungseinrichtung **21** wird mittels dem Bedienterminal **26** gesteuert. Der Streuercontroller **22** ist entweder über den Bus **25** oder über eine serielle Datenleitung mit der Auswerte- und Signalverarbeitungseinrichtung **21** verbunden, wobei der Streuercontroller seine Steuerbefehle nach Empfang und Verarbeitung der Reflexionssignale **R** bzw. Fluoreszenzsignale **F** von der Auswerte- und Signalverarbeitungseinrichtung **21** erhält.

Es ist ohne-weiteres möglich, das erfindungsgemäße Verfahren mit mehr als zwei spektralen Kanälen auszustatten. Hier bietet sich an, zwei weitere Kanäle mit einer Mittenwellenlänge von 940 nm und 970 nm vorzusehen. Bei einer Wellenlänge $\lambda 3 = 970$ nm befindet sich eine schwache Wasserabsorptionsbande. Der Quotient R(970 nm) / R (940 nm) lässt demzufolge eine Aussage über den relativen Wasserhaushalt im Bestand zu. Diese Information lässt sich beispielsweise dazu verwenden, die Düngermenge in sehr trockenen Beständen zu begrenzen, da ohne Wasserzufuhr der Dünger nicht von der Pflanze aufgenommen werden kann.

Des weiteren kann das erfindungsgemäße Verfahren auch zur Messung von Fluoreszenzsignaturen herangezogen werden. Der senderseitige Kantenfilter **9** wird in diesem Fall gegen einen Bandpassfilter ausgetauscht, der nur das Licht der gewünschten Anregungswellenlänge(n) $\lambda_a$ passieren lässt. Empfängerseitig sind dementsprechend die Interferenzfilter **15** durch Filter mit der gewünschten Fluoreszenz-Emissionswellenlängen $\lambda_{e1}...\lambda_{en} > \lambda_a$ zu ersetzen.

Eine typische Anwendung ist beispielsweise die Erfassung der Chlorophyllfluoreszenz von Pflanzen. Bei Anregungswellenlängen $\lambda a < \lambda_{e1}$ können bei $\lambda_{e1}$ = 685 nm und $\lambda_{e2}$ = 730 nm zwei ausgeprägte Fluoreszenzsignale F (685 nm) und F (730 nm) nachgewiesen werden.

Das Verhältnis aus diesen beiden Signalen wiederum steht in Beziehung zum Chlorophyllgehalt in dem Pflanzenbestand. Über den Chlorophyllgehalt lässt sich dann indirekt der Ernährungszustand der Pflanzen ermitteln. Bestimmte Kombinationen aus Fluoreszenz- und Reflexionsmessungen lassen sich durch das erfindungsgemäße Verfahren problemlos realisieren. Dies geschieht dadurch, dass die Mittenwellenlänge mindestens eines Empfangskanals in den Bereich der vom senderseitigen Filter durchgelassenen Anregungswellenlänge gelegt wird. Eine mögliche Anwendung stellt die Referenzierung von Chlorophyllfluoreszenzsignalen zur Unterdrückung von Schwankungen des Absolutwertes der Fluoreszenz dar.

Aufstellung der verwendeten Bezugszeichen

| | |
|---|---|
| Schleppfahrzeug | 1 |
| Ausbringer | 2 |
| Dach | 3 |
| Gehäuse | 4 |
| Sender | 5 |
| Xenon-Blitzlampe | 6 |
| Empfänger | 7 |
| Optische Detektoren | 8 |
| Filter | 9 |
| Optik für 5 | 10 |
| Blitzsteuerung | 11 |
| Referenzdetektor | 12 |
| Temperaturfühler | 13 |
| Fotodioden | 14 |
| Filter | 15 |
| Optik für 7 | 16 |
| Detektorsteuerung | 17 |
| Temperaturfühler | 18 |
| Steuereinheit | 19 |
| Multiplexer | 20 |
| Auswerte- und Signalverarbeitungseinrichtung | 21 |
| Streuercontroller | 22 |
| DGPS-Empfänger | 23 |
| Antenne | 24 |
| Bus | 25 |
| Bedienterminal | 26 |
| Kartenlaufwerk | 27 |
| Verstärker | 28 |
| Geschwindigkeit von 1 | v |
| Lichtfleck | $F_L$ |
| Optische Achsen Fotodioden | $A_{OF}$ |
| Optische Achsen Sender | $A_{OS}$ |
| Reflexionssignal (bei eingeschaltetem Blitz) | $R_S$ |
| Hintergrundsignal (bei ausgeschaltetem Blitz) | $R_D$ |
| Winkel (Schräglage) | $\beta$ |
| Wellenlängen | $\lambda_1...\lambda_n$ |
| Kalibrierungskonstante | C |
| Reflexionsgrad | $r_1, r_2$ |
| Messwert | S |
| Fluoreszenzsignal | F |

**Patentansprüche**

1. Verfahren zum berührungslosen Bestimmen und Beeinflussen des Pflanzenzustandes, insbesondere teilflächenspezifischen Düngen von Pflanzen, bei dem die Pflanzen mit einer modulierten künstlichen Lichtquelle aus Halogen- oder Xenonlicht durch einen Lichtfleck oder - streifen während des Überfahrens mit einem Träger beleuchtet, die Reflexionssignale des Blattwerkes der Pflanzen im sichtbaren und/oder nahinfraroten Spektralbereich durch Detektoren erfasst und an eine Auswerte- und Signalverarbeitungseinrichtung zum Bestimmen von biophysikalischen Parametern wie Biomasse, Chlorophyllund/oder Wassergehalt weitergegeben werden und daraus ein Maß für den Ernährungszustand der Pflanzen ermittelt wird, mit dem ein Rechner die entsprechend auszubringende Düngermenge als Zielgröße steuert, **gekennzeichnet durch** folgende Schritte:

    a) Beleuchten mehrerer Pflanzen eines Pflanzenbestandes mit einem einzigen spektral breitbandigen in schneller Folge Blitzlicht emittierenden Sender, wobei die von jedem Blitz abgegebene Energie von einem Referenzdetektor ermittelt, kontrolliert und temperaturbedingte Änderungen in der spektralen Zusammensetzung des Lichtes **durch** Temperaturmessuung kompensiert werden,
    b) Ausblenden nicht benötigter Wellenlängenanteile aus dem Blitzlicht **durch** Filtern,
    c) Erfassen der vom Pflanzenbestand reflektierten Strahlung bei eingeschalteten Blitzen 1...n und der Hintergrundstrahlung bei ausgeschaltetem Blitzlicht **durch** mindestens zwei spektral selektiv, auf aus Feldversuchen vorbestimmten und vorgewählten Wellenlängen $\lambda_1$ bis $\lambda_n$ eingestellten Empfängern als Reflexionssignale $R_S$ und $R_D$, wobei temperaturbedingte Änderungen der Signale **durch** eine Temperaturmessung korrigiert werden;
    d) Ermitteln mindestens einer Kalibrierungskonstante $C_i$ für den Sender und Empfänger **durch** Messen des Reflexionsgrades an einem Referenzobjekt mit bekanntem spektralen Reflexionsgrad;
    e) Digitalisieren und Ablegen der ermittelten n Reflexionssignale $R_{Si}$, n Hintergrundsignale $R_{Di}$ und Kalibrierungskonstanten $C_i$ der Schritte c) und d) im Speicher der Auswerte- und Signalverarbeitungseinrichtung;
    f) Berechnen mindestens eines Messwertes $S_{ij}$ aus den Reflexionssignalen $R_{Si}$ und $R_{sj}$ nach Abzug der Reflexionssignale $R_{Di}$ und $R_{Dj}$ (Hintergrundstrahlung) bei den Wellenlängen $\lambda_i$ und $\lambda_j$, wobei i≠j ist und der pro Blitzfolge errechnete Messwert $S_{ij}$ über eine bestimmte Zeitspanne t gemittelt abgelegt wird;
    g) Bestimmen der spezifischen Dosiermenge für die Pflanzen aus einem in der Auswerte- und Signalverarbeitungseinrichtung abgespeicherten empirisch ermittelten Zusammenhang zwischen Messwert $S_{ij}$ und den Zielgrößen als Steuergröße für die Ausgabe der Dosiermenge auf den Pflanzenbestand.

2. Verfahren nach Anspruch 1, **dadurch gekennzeichnet, dass** das Blitzlicht von Gasentladungsblitzlampen, wie Xenon-Blitzlampen, erzeugt wird.

3. Verfahren nach Anspruch 1 und 2, **dadurch gekennzeichnet, dass** die Blitzfrequenz f auf 1 bis 100 Hz, vorzugsweise 10 Hz, eingestellt wird.

4. Verfahren nach Anspruch 3, **dadurch gekennzeichnet, dass** die Blitzfrequenz f mindestens so groß gewählt wird, dass sich bei gegebener Geschwindigkeit v über den Bestand die detektierten Flächen .noch überlappen.

5. Verfahren nach Anspruch 1, **dadurch gekennzeichnet, dass** die zu messenden Pflanzen unter einem Winkel von 0 bis 90°, vorzugsweise 30°, beleuchtet werden.

6. Verfahren nach Anspruch 1, **dadurch gekennzeichnet, dass** die Reflexionssignale von einem integrierenden Verstärker verarbeitet werden, dessen Torzeit der Blitzdauer entspricht.

7. Verfahren nach Anspruch 1, **dadurch gekennzeichnet, dass** zum Ermitteln der Stickstoffgabe für den Pflanzenbestand die Empfänger auf eine Mittenwellenlänge von $\lambda_1$=730 nm $\pm$ 10 nm und eine Mittenwellenlänge von $\lambda_2$=760 nm $\pm$ 10 nm eingestellt werden.

8. Verfahren nach Anspruch 1, **dadurch gekennzeichnet, dass** zum Ermitteln der Wasserabsorptionsbande des Pflanzenbestandes die Empfänger auf eine Mittenwellenlänge von $\lambda_3$=900 nm $\pm$ 50 nm und eine Mittelwellenlänge von $\lambda_4$=970 nm $\pm$ 10 nm eingestellt werden.

9. Verfahren nach Anspruch 1, **dadurch gekennzeichnet, dass** für eine Messung der Fluoreszenz nur Wellenlängenbereiche innerhalb der Empfangswellenlänge $\lambda_i$ emittiert werden.

**10.** Verfahren nach Anspruch 1 und 9, **dadurch gekennzeichnet, dass** zum Ermitteln des Chlorophyllgehaltes der Pflanzenbestand bei einer Anregungswellenlänge $\lambda_a$<670 nm empfängerseitig je ein Spektralkanal mit $\lambda_{el}$=685 nm ± 10 nm und einer Wellenlänge $\lambda_{em}$=730 nm ± 10 nm eingesetzt wird.

**11.** Verfahren nach Anspruch 1 bis 10, **dadurch gekennzeichnet, dass** die Messung des Wassergehalts, der Biomasse und/oder des Chlorophyllgehalts durch eine Kombination von Reflexions- und Fluoreszenzmessungen durchgeführt wird, indem die Mittenwellenlänge mindestens eines Empfangskanals in den Bereich der vom senderseitigen Filter durchgelassenen Anregungswellenlängen gelegt wird.

**12.** Verfahren nach Anspruch 1 bis 11, **dadurch gekennzeichnet, dass** in die Zielgröße teilflächenspezifische Fremddaten, wie Bodendaten, Nährstoffgehalte, besondere Verhältnisse an Senken, Kuppen oder Rändern des Feldes einbezogen werden.

**13.** Verfahren nach Anspruch 1 bis 12, **dadurch gekennzeichnet, dass** die Ortkoordinaten des Trägers durch ein Global-Positioning-System bestimmt werden.

**14.** Vorrichtung zum Bestimmen und Beeinflussen des Pflanzenzustandes, insbesondere teilflächenspezifischen Düngen von Pflanzen zur Durchführung des Verfahrens nach Anspruch 1, mit einem verfahrbaren Träger, beispielsweise Fahrzeug und/oder angekuppelte Arbeitsmaschinen, eine am Träger befestigte Lichtquelle zum aktiven Beleuchten des Pflanzenbestandes als Sender, Detektoren als Empfänger der Reflexions- und/oder Fluoreszenzstrahlung, einer Auswerteund Signalverarbeitungseinrichtung zum Bestimmen des Ernährungszustands der Pflanzen durch Verarbeiten der Reflexions- und/oder Fluoreszenzsignale, einem im Träger angeordneten Bedienterminal und einem Ausbringer zur variablen Verteilung der Düngemittel, **dadurch gekennzeichnet, dass** der Sender **(5)** aus einer einzigen Blitzlampe **(6)** mit einem vorgeordnetem Filter **(9)** zum Ausblenden nicht benötigter Spektralanteile des ausgesandten Blitzlichts, einem Referenzdetektor **(12)** für die Ermittlung der Blitzlichtenergie, einem Temperaturfühler **(13)** zur Korrektur temperaturbedingter Änderungen der spektralen Zusammensetzung des Blitzlichtes, einer Optik **(10)** zum Fokussieren des Blitzlichtes auf den Pflanzenbestand und einer Blitzlichtsteuerung **(11)** gebildet ist, und dass der Empfänger **(7)** mindestens zwei Fotodioden **(14)**, denen jeweils ein Interferenzfilter **(15)** und eine Optik **(16)** so zugeordnet sind, dass das Sichtfeld der Fotodioden **(14)** der von der Blitzlampe **(6)** beleuchteten Fläche entspricht, einen Temperaturfühler **(18)** zur Korrektur temperaturbedingter Änderungen der Transmissionseigenschaften der Interferenzfilter **(15)** und der Fotodiodenempfindlichkeit und eine Detektorsteuerung **(17)** umfasst, und dass die Blitzlampensteuerung **(11)** und die Detektorsteuerung **(17)** mit der Auswerte- und Signalverarbeitungseinrichtung **(21)** zum Verarbeiten der Reflexions- und/oder Fluoreszenzsignale verbunden ist.

**15.** Vorrichtung nach Anspruch 14, **dadurch gekennzeichnet, dass** als Blitzlampe **(6)** eine Gasentladungsblitzlampe, beispielsweise Xenon-Blitzlampe, vorgesehen ist.

**16.** Vorrichtung nach Anspruch 14 und 16, **dadurch gekennzeichnet, dass** die Blitzlampe **(6)** eine Blitzfrequenz f von 1 bis 100 Hz, vorzugsweise 10 Hz, aufweist.

**17.** Vorrichtung nach Anspruch 14, **dadurch gekennzeichnet, dass** der Sender **(5)** und der Empfänger **(7)** einschließlich ihrer Steuereinheit **(19)** zu einer am Dach **(3)** des Schleppfahrzeuges **(1)** montierbaren Baueinheit zusammengefasst ist.

**18.** Vorrichtung nach Anspruch 17, **dadurch gekennzeichnet, dass** mindestens eine Baueinheit an jeder Längsseite des Schleppfahrzeuges **(1)** eine Einheit mit mindestens zwei Kanälen bildet, die mit der Auswerte- und Signalverarbeitungseinrichtung **(21)** durch einen Multiplexer **(20)** zur gemeinsamen Ansteuerung beider Kanäle verbunden ist.

**19.** Vorrichtung nach Anspruch 18, **dadurch gekennzeichnet, dass** die beiden Kanäle jeweils einzeln mit der Auswerte- und Signalverarbeitungseinrichtung (21) zur separaten Ansteuerung der einzelnen Kanäle verbunden sind.

**20.** Vorrichtung nach Anspruch 14 bis 19, **dadurch gekennzeichnet, dass** die Blitzlampe **(6)** so montiert ist, dass das Blitzlicht unter einem Winkel β von 0 bis 90°, vorzugsweise 30°, den Pflanzenbestand von oben erfasst.

**21.** Vorrichtung nach Anspruch 14 bis 19, **dadurch gekennzeichnet, dass** die optischen Achsen **($A_{OS}$;$A_{OF}$)** des Senders **(5)** und der Fotodioden **(14)** parallel zueinander angeordnet sind und nah beieinander liegen.

**22.** Vorrichtung nach Anspruch 14 bis 19, **dadurch gekennzeichnet, dass** die optische Achsen $(A_{OS}; A_{OS})$ des Senders **(5)** und der Fotodioden **(14)** einen kleinen Winkel miteinander einschließen, so dass sich die optischen Achsen in einem Punkt auf dem Pflanzenbestand treffen.

**23.** Vorrichtung nach Anspruch 14, **dadurch gekennzeichnet, dass** die separaten Temperaturfühler **(13;18)** in einem gemeinsamen Temperaturfühler zusammengefasst sind.

**24.** Vorrichtung nach Anspruch 14, **dadurch gekennzeichnet, dass** der Filter **(9)** ein Kantenfilter oder ein Bandpassfilter ist.

**25.** Vorrichtung nach Anspruch 14, **dadurch gekennzeichnet, dass** im Träger ein durch die Auswerte- und Signalverarbeitungseinrichtung **(21)** angesteuerter Streuercontroller **(22)** zur Steuern des Ausbringers **(2)** zur variablen Verteilung der Düngemittel vorgesehen ist.

**26.** Vorrichtung nach Anspruch 14 bis 19, **dadurch gekennzeichnet, dass** den Sendern **(5)** und Empfängern **(7)** ein (D)GPS-Receiver **(23)** mit Antenne **(24)** zugeordnet ist.

**27.** Vorrichtung nach Anspruch 14 bis 19, **dadurch gekennzeichnet, dass** in dem Schleppfahrzeug **(1)** ein Bus-System **(25)** zum Anschluss der Auswerte- und Signalverarbeitungseinrichtung **(21),** des Streuercontrollers **(22),** des (D)GPS-Empfängers **(23)** mit Antenne **(24),** dem Bedienterminal **(26)** mit Kartenlaufwerk **(27)** vorgesehen ist.

**Claims**

**1.** Method for determining and influencing the state of plants in a contactless manner, in particular the patch-specific fertilising of plants, in which the plants are illuminated by a modulated artificial halogen or xenon light source by means of a light spot or light strip during traversal with a carrier, the reflection signals of the foliage of the plants are captured in the visible and/or near-infrared spectral range by means of detectors and passed on to an evaluation and signal processing unit for determining biophysical parameters such as biomass, chlorophyll and/or water content and a measurement for the nutrition level of the plants is derived therefrom, which a computer uses to control the appropriate quantity of fertiliser to be applied as a target variable, **characterised by** the following steps:

a) Illumination of several plants of a bed with a single broadband spectral transmitter that emits flashes in quick succession, where the energy issued by each flash is calculated and controlled by a reference detector and temperature-related changes to the spectral composition of the light are compensated by means of temperature measurement;

b) Shielding of superfluous wavelength sections from the flash by means of filters;

c) Detection of the radiation reflected from the plant bed when flashguns 1...n are switched on and of the background radiation when the flash is switched off by means of two spectrally selective receivers as reflection signals $R_S$ and $R_D$, set to wavelengths $\lambda_1$ to $\lambda_n$ predetermined and preselected from field trials, where temperature-related changes of the signals are corrected by means of a temperature measurement;

d) Calculation of at least one calibration constant $C_i$ for the transmitter and receiver by measuring the reflection level on a reference object with a known spectral reflection level;

e) Digitisation and storage of the calculated n reflection signals $R_{Si}$, n background signals $R_{Di}$ and calibration constants $C_i$ of steps c) and d) in the memory of the evaluation and signal processing unit;

f) Calculation of at least one measured value $S_{ij}$ from the reflection signals $R_{Si}$ and $R_{Sj}$ after removal of the reflection signals $R_{Di}$ and $R_{Dj}$ (background radiation) at wavelengths $\lambda_i$ and $\lambda_j$, where $i \neq j$ and the measured value $S_{ij}$ calculated per flash sequence is stored, averaged across a specific timespan t;

g) Determination of the specific dosage quantity for the plants from an empirically calculated correlation, stored in the evaluation and signal processing unit, between the measured value $S_{ij}$ and the target variables as a control variable for the distribution of the dosage quantity onto the plant bed.

**2.** Method according to claim 1, **characterised in that** the flash is generated by gas discharge lights, such as xenon flashlights.

**3.** Method according to claims 1 and 2, **characterised in that** the flash frequency f is set to 1 to 100 Hz, preferably 10 Hz.

4. Method according to claim 3, **characterised in that** the selected flash frequency is at least at a level at which the captured surfaces still overlap at a given speed v across the bed.

5. Method according to claim 1, **characterised in that** the plants to be measured are illuminated at an angle of 0 to 90°, preferably 30°.

6. Method according to claim 1, **characterised in that** the reflection signals are processed by an integrating amplifier whose gating time corresponds to the flash duration.

7. Method according to claim 1, **characterised in that**, to calculate the nitrogen dose for the plant bed, the receivers are set to a centre wavelength of $\lambda_1$ = 730 nm ± 10 nm and a centre wavelength of $\lambda_2$ = 760 nm ± 10 nm.

8. Method according to claim 1, **characterised in that**, to calculate the water absorption bands of the plant bed, the receivers are set to a centre wavelength of $\lambda_3$ = 900 nm ± 50 nm and a centre wavelength of $\lambda_4$ = 970 nm ± 10 nm.

9. Method according to claim 1, **characterised in that** only wavelength ranges within the reception wavelength $\lambda_1$ are emitted for a measurement of the fluorescence.

10. Method according to claims 1 and 9, **characterised in that**, to calculate the chlorophyll content of the plant bed at an excitation wavelength of $\lambda_a$ < 670 nm on each receiver side, a spectral channel with $\lambda_{el}$ = 685 nm and a wavelength of $\lambda_{em}$ = 730 nm ± 10 nm is used.

11. Method according to claims 1 to 10, **characterised in that** measurement of the water content, the biomass and/or the chlorophyll content is carried out by means of a combination of reflection and fluorescence measurements, the centre wavelength of at least one receiving channel being set in the range of the excitation wavelengths allowed through by the filter on the transmitter side.

12. Method according to claims 1 to 11, **characterised in that** patch-specific external data, such as soil data, nutrient content, special conditions relating to dips, mounds or edges of the field are incorporated in the target variables.

13. Method according to claims 1 to 12, **characterised in that** the position coordinates of the carrier are determined by means of a global positioning system.

14. Device for determining and influencing the state of plants, in particular the patch-specific fertilising of plants, to carry out the method according to claim 1, with a mobile carrier, for example vehicle and/or coupled working machines, a light source fastened to the carrier for the active illumination of the plant bed as a transmitter, detectors as receivers of the reflection and/or fluorescence radiation, an evaluation and signal processing unit to determine the nutrition status of the plants by processing the reflection and/or fluorescence signals, a control terminal arranged in the carrier and a conveyor for variable distribution of the fertilisers, **characterised in that** the transmitter (5) is formed from a single flashlight (6) with a primary filter (9) for shielding superfluous spectral sections of the emitted flash, a reference detector (12) for calculating the flash energy, a temperature sensor (13) for correcting temperature-related changes to the spectral composition of the flash, a lens system (10) for focusing the flash onto the plant bed and a flash control (11), and that the receiver (7) comprises at least two photo diodes (14), to each of which are assigned an interference filter (15) and a lens system (16) in such a way that the visual field of the photo diodes (14) corresponds to the area illuminated by the flashlight (6), a temperature sensor (18) for correcting temperature-related changes to the transmission properties of the interference filters (15) and the photo diode sensitivity, and a detector control unit (17), and that the flashlight control unit (11) and the detector control unit (17) are connected to the evaluation and signal processing unit (21) for processing the reflection and/or fluorescence signals.

15. Device according to claim 14, **characterised in that** a gas discharge light, for example a xenon flashlight, is provided as a flashlight (6).

16. Device according to claims 14 and 16 (sic), **characterised in that** the flashlight (6) has a flash frequency f of 1 to 100 Hz, preferably 10 Hz.

17. Device according to claim 14, **characterised in that** the transmitter (5) and the receiver (7) including their control unit (19) are combined to form a module that can be mounted on the roof (3) of the towcar (1).

18. Device according to claim 17, **characterised in that** at least one module on each longitudinal side of the towcar (1) forms a unit with at least two channels that is connected to the evaluation and signal processing unit (21) by means of a multiplexer (20) for joint actuation of both channels.

19. Device according to claim 18, **characterised in that** both channels are individually connected to the evaluation and signal processing unit (21) for separate actuation of the individual channels.

20. Device according to claims 14 to 19, **characterised in that** the flashlight (6) is mounted in such a way that the flash captures the plant bed from above at an angle β of 0 to 90°, preferably 30°.

21. Device according to claims 14 to 19, **characterised in that** the optical axes ($A_{OS}$;$A_{OF}$) of the transmitter (5) and the photo diodes (14) are arranged parallel to each other and are situated close together.

22. Device according to claims 14 to 19, **characterised in that** the optical axes ($A_{OS}$;$A_{OS}$) of the transmitter (5) and the photo diodes (14) include a small adjoining angle, such that the optical axes meet at a point on the plant bed.

23. Device according to claim 14, **characterised in that** the separate temperature sensors (13;18) are combined in a joint temperature sensor.

24. Device according to claim 14, **characterised in that** the filter (9) is an edge filter or a bandpass filter.

25. Device according to claim 14, **characterised in that** a spreader controller (22) actuated by means of the evaluation and signal processing unit (21) is provided for controlling the conveyor (2) for variable distribution of the fertilisers is provided in the carrier.

26. Device according to claims 14 to 19, **characterised in that** a (D)GPS receiver (23) with an antenna (24) is assigned to the transmitters (5) and receivers (7).

27. Device according to claims 14 to 19, **characterised in that** a bus system (25) for connecting the evaluation and signal processing unit (21), the spreader controller (22) and the (D)GPS receiver (23) with antenna (24) to the control terminal (26) with card drive (27) is provided in the towcar (1).

**Revendications**

1. Procédé permettant de déterminer et influencer sans contact l'état de plantes, en particulier d'engraisser des surfaces partielles spécifiques de plantes, dans lequel les plantes sont éclairées à l'aide d'une source lumineuse modulée artificielle en lumière halogène ou xénon, par une tache ou une bande de lumière, lorsqu'un support passe au-dessus de celles-ci, les signaux de réflexion des feuilles des plantes sont détectés par des détecteurs dans le domaine spectral du visible et/ou de l'infrarouge proche et sont transmis à un dispositif d'évaluation et de traitement de signaux pour déterminer des paramètres biophysiques tels que la biomasse, la teneur en chlorophylle et/ou en eau, et une mesure pour l'état nutritionnel des plantes en est déterminée avec laquelle un ordinateur commande - en tant que grandeur cible - la quantité d'engrais à épandre au fur et à mesure, **caractérisé par** les étapes suivantes:

   a) éclairage de plusieurs plantes d'un ensemble de plantes à l'aide d'un seul émetteur à large bande spectrale qui émet une lumière flash à séquence rapide, l'énergie dégagée par chaque flash étant déterminée par un détecteur de référence, étant contrôlée et des changements dans la composition spectrale de la lumière qui sont dus à la température étant compensés par un mesurage de température,
   b) suppression de portions non nécessaires de longueur d'onde de la lumière flash par filtrage,
   c) détection du rayonnement réfléchi par l'ensemble de plantes lorsque les flashs 1...n sont allumés et du rayonnement de fond lorsque la lumière flash est éteinte, par au moins deux récepteurs spectralement sélectifs, en tant que signaux de réflexion $R_S$ et $R_D$, lesdits récepteurs étant réglés à des longueurs d'onde $\lambda_1$ à $\lambda_n$ prédéterminées lors d'essais de plein champ et choisies d'avance, des changements des signaux, qui sont dus à la température étant corrigés par un mesurage de température ;
   d) détermination d'au moins une constante de calibrage $C_i$ pour l'émetteur et le récepteur par mesurage du degré de réflexion sur un objet de référence à degré connu de réflexion spectrale ;
   e) numériser les n signaux de réflexion $R_{si}$, les n signaux de fond $R_{Di}$ et les constantes de calibrage $C_i$ déter-

minés des étapes c) et d) et mettre ceux-ci dans la mémoire du dispositif d'évaluation et de traitement de signaux ;

f) calculer au moins une valeur de mesure $S_{ij}$ à partir des signaux de réflexion $R_{si}$ et $R_{sj}$ après déduction des signaux de réflexion $R_{Di}$ et $R_{Dj}$ (rayonnement de fond) dans les longueurs d'onde $\lambda_i$ et $\lambda_j$, où $i \neq j$ et la valeur de mesure $S_{ij}$ qui est calculée par séquence de flashs et dont on a fait la moyenne sur un laps de temps déterminé étant mémorisée ;

g) déterminer la quantité spécifique de dosage pour les plantes à partir d'une relation entre la valeur de mesure $S_{ij}$ et les grandeurs cibles en tant que grandeur de commande pour la distribution de la quantité de dosage sur l'ensemble de plantes, ladite relation étant mémorisée dans le dispositif d'évaluation et de traitement de signaux et étant déterminée de manière empirique.

2. Procédé selon la revendication 1, **caractérisé par le fait que** la lumière flash est générée par des lampes-flashs à décharge, telles que les lampes-flashs à xénon.

3. Procédé selon la revendication 1 et 2, **caractérisé par le fait que** la fréquence f de flashs est réglée entre 1 et 100 Hz, de préférence à 10 Hz.

4. Procédé selon la revendication 3, **caractérisé par le fait que** la fréquence f de flashs est choisie au moins tellement que, dans le cas d'une vitesse v donnée sur l'ensemble, les surfaces détectées chevauchent encore.

5. Procédé selon la revendication 1, **caractérisé par le fait que** les plantes à mesurer sont éclairées sous un angle compris entre 0 et 90°, de préférence de 30°.

6. Procédé selon la revendication 1, **caractérisé par le fait que** les signaux de réflexion sont traités par un amplificateur intégrant dont le temps de portillonnage correspond à la durée de flash.

7. Procédé selon la revendication 1, **caractérisé par le fait que**, pour déterminer la quantité d'azote pour l'ensemble de plantes, les récepteurs sont réglés à une longueur d'onde moyenne de $\lambda_1 = 730$ nm $\pm$ 10 nm et à une longueur d'onde moyenne de $\lambda_2 = 760$ nm $\pm$ 10 nm.

8. Procédé selon la revendication 1, **caractérisé par le fait que**, pour déterminer la bande d'absorption d'eau de l'ensemble de plantes, les récepteurs sont réglés à une longueur d'onde moyenne de $\lambda_3 = 900$ nm $\pm$ 50 nm et à une longueur d'onde moyenne de $\lambda_4 = 970$ nm $\pm$ 10 nm.

9. Procédé selon la revendication 1, **caractérisé par le fait que**, pour un mesurage de la fluorescence, seulement des gammes d'ondes à l'intérieur de la longueur d'onde de réception $\lambda_i$ sont émises.

10. Procédé selon la revendication 1 et 9, **caractérisé par le fait que**, pour déterminer la teneur en chlorophylle de l'ensemble de plantes, on utilise du côté du récepteur - dans le cas d'une longueur d'onde d'excitation $\lambda_a < 670$ nm - respectivement un canal spectral avec $\lambda_{el} = 685$ nm $\pm$ 10 nm et une longueur d'onde $\lambda_{em} = 730$ nm $\pm$ 10 nm.

11. Procédé selon la revendication 1 à 10, **caractérisé par le fait que** le mesurage de la teneur en eau, de la biomasse et/ou de la teneur en chlorophylle est réalisé par une combinaison de mesurages de réflexion et de fluorescence en plaçant la longueur d'onde moyenne d'au moins un canal récepteur dans la gamme des longueurs d'onde d'excitation que laisse passer le filtre situé du côté de l'émetteur.

12. Procédé selon la revendication 1 à 11, **caractérisé par le fait que** des données étrangères spécifiques à des surfaces partielles, telles que les données du sol, les teneurs en substances nutritives, les conditions particulières sur des dépressions, sommets ou bordures du champ sont impliquées dans la grandeur cible.

13. Procédé selon la revendication 1 à 12, **caractérisé par le fait que** les coordonnées du lieu du support sont déterminées par un système de positionnement global (Global-Positioning-System).

14. Dispositif destiné à déterminer et à influencer l'état de plantes, en particulier à engraisser des surfaces partielles spécifiques de plantes, pour la mise en oeuvre du procédé selon la revendication 1, comprenant un support déplaçable, par exemple un véhicule et/ou des machines de travail accouplées, une source lumineuse comme émetteur, qui est fixée sur le support et destinée à l'éclairage actif de l'ensemble de plantes, des détecteurs en tant que récepteurs du rayonnement de réflexion et/ou de fluorescence, un dispositif d'évaluation et de traitement de signaux destiné à déterminer l'état nutritionnel des plantes en traitant les signaux de réflexion et/ou de fluorescence, un terminal de commande disposé dans le support ainsi qu'un distributeur pour la distribution variable des engrais, **caractérisé par le fait que** l'émetteur (5) se compose d'une seule lampe-flash (6) comprenant un filtre (9) placé en amont et destiné à supprimer les portions spectrales non nécessaires de la lumière flash émise, d'un détecteur de référence (12) pour la détermination de l'énergie de la lumière flash, d'un palpeur de température (13) pour la correction de changements de la composition spectrale de la lumière flash, qui sont dus à la température, d'un système optique (10) de focalisation de la lumière flash sur l'ensemble de plantes ainsi que d'une commande de lumière flash (11), et que le récepteur (7) comprend au moins deux photodiodes (14) auxquelles sont associés respectivement un filtre d'interférence (15) et un système optique (16) de telle manière que le champ visuel des photodiodes (14) correspond à la surface éclairée par la lampe-flash (6), un palpeur de température (18) destiné à la correction de changements - dus à la température - des propriétés de transmission des filtres d'interférence (15) et de la sensibilité des photodiodes, ainsi qu'une commande de détecteur (17), et que la commande (11) de la lampe-flash et la commande de détecteur (17) sont reliées au dispositif d'évaluation et de traitement de signaux (21) pour le traitement des signaux de réflexion et/ou de fluorescence.

15. Dispositif selon la revendication 14, **caractérisé par le fait que** l'on prévoit comme lampe-flash (6) une lampe-flash à décharge, par exemple une lampe-flash à xénon.

16. Dispositif selon la revendication 14 et 15, **caractérisé par le fait que** la lampe-flash (6) présente une fréquence f de flashs comprise entre 1 et 100 Hz, de préférence de 10 Hz.

17. Dispositif selon la revendication 14, **caractérisé par le fait que** l'émetteur (5) et le récepteur (7) y compris leur unité de commande (19) sont réunis pour former une unité qui peut être montée sur le toit (3) du véhicule remorqueur (1).

18. Dispositif selon la revendication 17, **caractérisé par le fait qu'**au moins une unité sur chaque grand côté du véhicule remorqueur (1) forme une unité avec deux canaux au moins, qui est reliée au dispositif d'évaluation et de traitement de signaux (21) par l'intermédiaire d'un multiplexeur (20) pour la commande commune des deux canaux.

19. Dispositif selon la revendication 18, **caractérisé par le fait que** les deux canaux sont reliés respectivement individuellement au dispositif d'évaluation et de traitement de signaux (21) pour la commande séparée des canaux individuels.

20. Dispositif selon la revendication 14 à 19, **caractérisé par le fait que** la lampe-flash (6) est montée de telle façon que la lumière flash éclaire l'ensemble de plantes d'en haut sous un angle β compris entre 0 et 90°, de préférence de 30°.

21. Dispositif selon la revendication 14 à 19, **caractérisé par le fait que** les axes optiques ($A_{OS}$ ; $A_{OF}$) de l'émetteur (5) et des photodiodes (14) sont disposés parallèlement l'un à l'autre et sont situés près l'un de l'autre.

22. Dispositif selon la revendication 14 à 19, **caractérisé par le fait que** les axes optiques ($A_{OS}$ ; $A_{OF}$) de l'émetteur (5) et des photodiodes (14) incluent un petit angle l'un avec l'autre de sorte que les axes optiques se rencontrent sur un point sur l'ensemble de plantes.

23. Dispositif selon la revendication 14, **caractérisé par le fait que** les palpeurs séparés de température (13 ; 18) sont réunis pour former un palpeur commun de température.

24. Dispositif selon la revendication 14, **caractérisé par le fait que** le filtre (9) est un filtre à arêtes ou un passe-bande.

25. Dispositif selon la revendication 14, **caractérisé par le fait que** l'on prévoit dans le support un contrôleur d'épandeur (22) qui est commandé par le dispositif d'évaluation et de traitement de signaux (21) et qui est destiné à commander le distributeur (2) pour la distribution variable des engrais.

26. Dispositif selon la revendication 14 à 19, **caractérisé par le fait qu'**un récepteur (D)GPS (23) avec antenne (24) est associé aux émetteurs (5) et aux récepteurs (7).

27. Dispositif selon la revendication 14 à 19, **caractérisé par le fait que** l'on prévoit dans le véhicule remorqueur (1) un système à bus (25) pour le raccordement du dispositif d'évaluation et de traitement de signaux (21), du contrôleur d'épandeur (22), du récepteur (D)GPS (23) avec antenne (24), du terminal de commande (26) avec lecteur de cartes (27).

FIG. 1

FIG. 2

15

FIG. 3

EP 1 429 594 B1

FIG. 4

FIG.5

FIG. 6

24

Benutzerschnittstelle

26

5/7    5/7

Bedienterminal

Datenkarte

RIF    RIF

23    (D)GPS
Empfänger

Kartenlaufwerk

27

Service-
Schnittstelle

Bus (LBS, ISO, ...)

25

Düngerstreuer,
Spritze

Streuer-
Controller

2

21

22

FIG. 7